# EUROPÄISCHE PATENTANMELDUNG

(11) **EP 4 480 927 A1**
(43) Veröffentlichungstag der Anmeldung: **25.12.2024**
(21) Anmeldenummer: 23180539.1
(22) Anmeldetag: 21.06.2023
(51) Int. Cl.: C02F 1/48, C02F 1/00, C02F 1/30

(54) **BEHANDLUNG VON FLÜSSIGKEITEN ZUR VERÄNDERUNG IHRER EIGENSCHAFTEN**

(71) Anmelder: PBTechnology, s.r.o, 831 03 Bratislava (SK)
(72) Erfinder: PETROVSKY, Jan, 094 31 Hanusovce nad Topl'ou (SK)
(74) Vertreter: Jeck, Jonathan

(57) **Zusammenfassung**

Es handelt sich um ein Verfahren zur physikalischen Behandlung von Flüssigkeiten, Gasen und Feststoffen bei einer Frequenz von 120 MHz bis 1450 MHz. Dabei erfolgt die Beaufschlagung des Mediums in verschiedenen Aggregatzuständen. Die gasförmigen Medien werden vor der Oxidation und/oder direkt während der Oxidation und/oder die Verbrennungsabgase des Brennstoffs beaufschlagt.

## Beschreibung

### Bereich der Technologie

Die Erfindung betrifft ein Verfahren zur molekularphysikalischen Behandlung von Flüssigkeiten sowie eine Vorrichtung zur Durchführung des Verfahrens. Es werden unterschiedliche Medien, wie Gase, Verbindungen davon, Kolloide von Suspensionen, Emulsionen, Aerosole, Schäume, organische, anorganische, polare und unpolare Medien sowie natürliche und synthetische Medien behandelt.

### Stand der Technik

Bekannte Verfahren und Vorrichtungen sind z.B. in den WO 2007/ 045 487 A1, WO 2012/ 1500 A1 und WO 2013/ 045 116 A2 offenbart, in denen es um die Erwärmung eines flüssigen und gasförmigen Mediums in einem geschlossenen oder offenen Rohrleitungssystem geht. Ferner ist in Stand der Technik offenbart.

Die Lösung von 2012 konzentriert sich auf eine breite Palette von Medien und deren Durchgang durch die behandelte Anlage in einem einzigen Durchgang und/oder es wird nur ein Teil der Medien behandelt, der anschließend mit denselben, aber unbehandelten Medien gemischt wird. Die Lösung gemäß WO 2013/0451 16 A2 zielt auf die Behandlung von Wasser als Medium in einem offenen Rohrleitungssystem mit einem Auslass in eine externe, überwiegend atmosphärische Umgebung mit einer anderen Temperatur als die des Mediums.

Der wesentliche Nachteil der vorgenannten Lösungen ist eine langsame Erwärmung des Mediums. Mitunter sind die hydraulischen Verluste in einem geschlossenen Rohrleitungssystem größer als die dabei erzeugten Wärme. Ferner hat sich als Nachteil erwiesen, dass mit einer Temperatur von maximal etwa 100 C gearbeitet werden kann. Schließlich hat sich als Nachteil erwiesen, bei hohen Durchflussmengen Bypässe einzusetzen, die nachteilig sind, wenn es um die Installationszeit der Anlagen geht.

Der Erfindung liegt die Aufgabe zugrunde, hier Abhilfe zu schaffen und Schadstoffgehalt (CO2) in den technologischen Prozessen (Turbinenkühlung, Heizung in Dampfkessel) zu minimieren.

Die gestellte Aufgabe wird durch die Merkmale des Anspruchs 1 gelöst.

Weitere zweckmäßige und vorteilhafte Maßnahmen der Erfindung gehen aus den Unteransprüchen hervor.

Beim erfindungsgemäßen Verfahren wurden folgende Parameter und Größen gemessen.

Wenn in dem Rohrleitungssystem, in dem die supramolekularen Strukturvorrichtungen installiert sind, auch eine Wärme- oder Kältequelle vorhanden ist, kommt es zu einem Energiegewinn im Medium im Bereich von 20 % +/- 5 %, je nach Art des behandelten Mediums. Der Energiegewinn bei Medien, die eine stärkere Bindung in den Molekülen und zwischen den Molekülen aufweisen, ist geringer und für Medien, die eine schwächere Bindung aufweisen (Gas, Dampf), ist der Energiegewinn grö-ßer.

Wenn ein Medium erfindungsgemäß behandelt wird und sodann durch eine künstliche Quelle (Heizkessel, Kältemaschine) oder eine natürliche Quelle (Sonne, Kälte) erhitzt oder abgekühlt wird, nimmt das Medium diese Energie schneller auf.

Ein Ausführungsbeispiel der Erfindung ist in der Zeichnung schematisch dargestellt und wird näher erläutert.

Es zeigen:
- Fig. 1: einen externer Wärmelieferant mit einem Wärmeverbraucher in einem geschlossenen hydraulischen System.
- Fig. 2: eine Schaltung einer Turbine mit Aufbereitung desselben Mediums in flüssigem und gasförmigem Zustand bzw. Kondensat.
- Fig. 3: einen Kreislauf des Behandlungsverfahrens für zwei Medien, nämlich flüssig und gasförmig.
- Fig. 4: den Einsatz eines Behandlungsverfahrens mit einer supramolekularen Struktur für eine Flüssigkeit (Wasser), ein Gas (Dampf) und Abwasser, z.B. in einer Wäscherei.
- Fig. 5: eine Vorrichtung zur supramolekularen Behandlung von Medien für Temperaturen über 100°C.
- Fig.5a: eine alternative Ausführung des Abscheiders nach Fig.5.
- Fig. 5b: einen Anschluss der Ionisationselektrode an die Ionisationskammer für Temperaturen über 100°C.
- Fig. 6: eine Vorrichtung zur supramolekularen Behandlung von Medien mit kontrollierter Polarisation und/oder mit einer anderen Art von Energie - Lichtenergie in Form von Photonen.
- Fig. 6a: eine Eintauchvorrichtung für Tanks und Becken.
- Fig. 6b: lonisations- und Polarisationselektroden in einer einzigen Einheit mit intelligenter Steuerung der Polarisationspotentiale.
- Fig. 7: eine Vorrichtung zur molekularen Behandlung von Brennstoffen mit einer kombinierten gemeinsamen Elektrode (Fig. 6b).
- Fig. 8: eine kombinierte gemeinsame Elektrode mit einem Strom von flüssigem und/oder gasförmigem Medium in der Achse der Elektrode.
- Fig. 8b: eine gemeinsame kombinierte Elektrode mit wiederholter Ionisierung und Polarisierung für mehr als ein Medium, vorzugsweise für Flüssigkeiten und Gase mit unterschiedlichem Medienfluss.

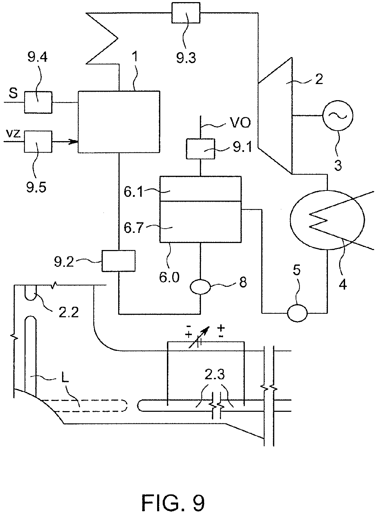

- Fig. 9: zeigt eine Schaltung der Ausführungsform nach der Erfindung.

### Beispiele für Ausführungsformen der Erfindung

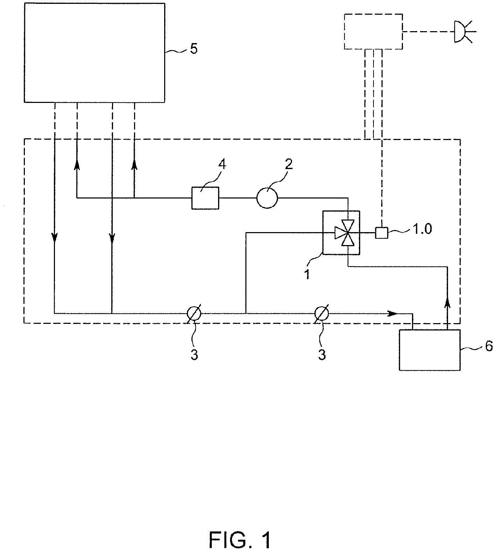

Fig. 1 zeigt eine Vorrichtung zur Ausführung des Verfahrens nach der Erfindung in Energieheizungsanlagen von externen Anbietern der Wärme. Es handelt sich um ein geschlossenes Rohrleitungssystem mit einem Dreiwegemischventil 1 sowie Regelung 1.0. Die Ausgänge des zentralen Wärmelieferanten 5.0 sind an eine Einrichtung 4 mit einer supramolekularen Aufbereitung des Heizmediums angeschlossen. Am Eingang ist eine Pumpe 2 vor- oder nachgeschaltet ist, die mit dem Eingang des Mischventils 1 verbunden ist. Einer der hydraulischen Zweige des Mischventils 1 ist mit dem n-ten Wärmeabnehmer 6 verbunden und dessen anderer hydraulischer Zweig des Drei-Wege-Mischventils1 mit dem hydraulischen Rücklaufzweig des Wärmeabnehmer 6 verbunden. Im Wärmekreislauf des Wärmelieferanten 5 befinden sich Kalorimeter. Zwischen denen befindet sich eine Zweigleitung, die mit dem Dreiwegemischventil 1 mit einem Regler 1.0 verbunden ist. Der Kreislauf wird von dem Regler 1.0 über einen physikalischen Informations- und Steuergeber 1.1 gesteuert.

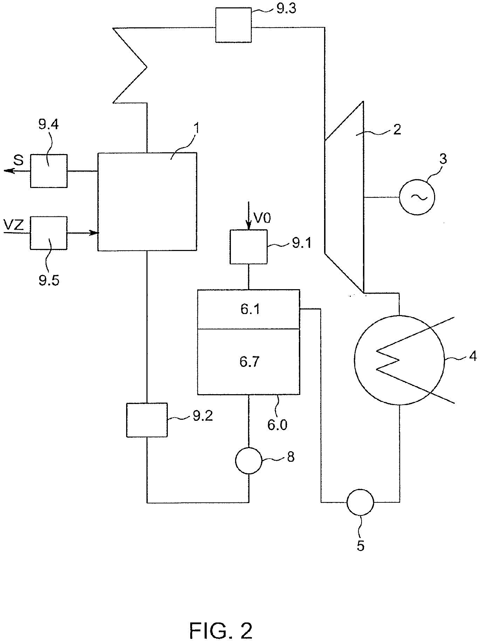

Fig. 2 zeigt eine Vorrichtung zur Behandlung von flüssigen und gasförmigen Medien, wie Verbrennungsluft und Rauchgas, Dabei wird mit einer supramolekularen Medienstruktur gearbeitet. Der im Dampfkessel 1 erzeugte Dampf wird in der Vorrichtung 9.3 behandelt, danach tritt der Dampf in die Turbine 2 ein, an die ein Alternator 3 angeschlossen ist. Von dort aus wird der Dampf genutzt und abgekühlt, tritt in den Kondensator 4 ein, wo er in ein flüssiges Kondensat mit verändertem Aggregatzustand umgewandelt wird. Die Pumpe 5 transportiert das Medium in den Speisetank 6.0 mit einem Entgasungsteil 6.1. Dabei werden vorteilhaft supramolekularere Strukturen in das Speisewasser eingespeist. Von dort aus gelangt das Medium zum Dampfkessel 1 mit einer zweiten Vorrichtung 9.2 und einer dritten Vorrichtung 9.3 zur Behandlung der Medien mit supramolekularer Struktur. Dabei kann das Gas mit der Vorrichtung 9.4 mit supramolekularer Struktur sowie mit Luft in der Vorrichtung 9.5 behandelt werden.

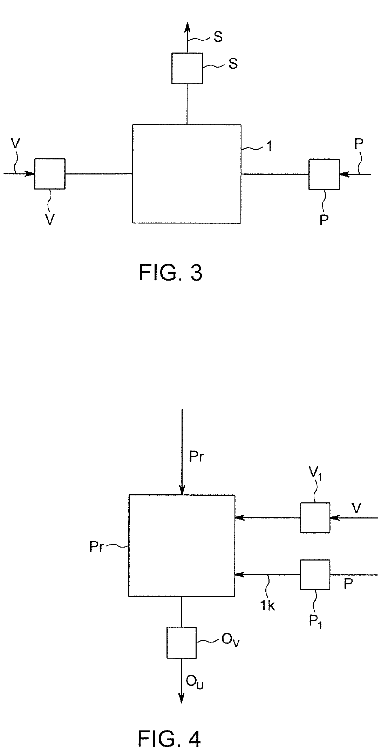

Fig. 3 zeigt einen kombinierten Kreislauf mit Wechselwirkung, bei dem die für die Verbrennung notwendige Luft in der Vorrichtung V behandelt wird. Dabei wird der Kraftstoff p (Kerosin und Äquivalente davon) vor dem Einfüllen in den Kraftstofftank mit einer supramolekularen Struktur behandelt. In einer alternativen Ausführungsform wird der Kraftstoff durch die Vorrichtung P im Kraftstoffsystem des Aggregats 1 oder im Kraftstofftank behandelt. Das Abgas kann mit der supramolekularen Behandlungsvorrichtung S behandelt werden.

Abb. 4 zeigt schematisch ein kombiniertes Verfahren mit einer supramolekularen Medienstruktur in der Wäschereiindustrie. Dabei wird das Eingangswasser durch die Vorrichtung V1 aufbereitet und in Waschmaschinen Pr verwendet. In ähnlicher Weise wird auch der Prozessdampf p behandelt, der nach Durchlaufen der Vorrichtung P1 neue Eigenschaften erhält. Dieser Damp kann auch zum Heizen in Heizkörpern oder zum Bügeln k usw. verwendet werden. Eine weitere Möglichkeit ist die Behandlung des Abwassers ov durch die Vorrichtung OV.

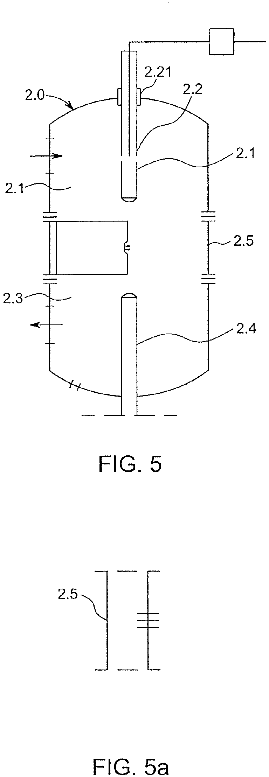

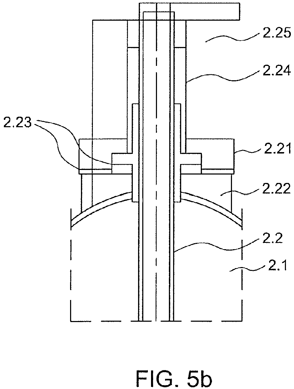

Abb. 5 zeigt die Behandlungsvorrichtung 2.0 für Medientemperaturen über 100°C, vorzugsweise Dampf. Die Behandlungsvorrichtung 2.0 zur Behandlung eines Mediums mit supramolekularer Struktur besteht aus einer Metallionisationskammer 2.1 mit einer Ionisationselektrode 2.2 und einer Polarisationskammer 2.3 mit einer Polarisationselektrode 2.4. Zwischen den Kammern befindet sich ein Abstandshalter 2.5, der eine Potentialschicht bildet. Die Ionisationselektrode 2.1 ist wasser- und luftdicht im Gerätekörper 2.2 untergebracht.

FIG. 5a zeigt eine alternative Ausführungsform eines Zwischenabscheiders 2.5 und/oder einer AZ-Kammer mit einem Laser L. Die AZ-Kammer umfasst eine Photonenquelle, eine elektrische Quelle und eine Mineralquelle.

Fig.5b zeigt die Verbindung der Ionisationselektrode 2.2 mit dem Gerätekörper 2.0. In der alternativen Ausführungsform von Fig. 5a umfasst sie eine Umfangs- und/oder Axialschicht. Eine solche Anordnung eignet sich, wenn der behandelte Dampf direkt mit einem flüssigen Medium, z. B. Öl, bei der Herstellung von Benzol in Koksöfen in einer Destillationskolonne und dergleichen in Kontakt gebracht wird. Die Ionisationselektrode 2.2 hat einen Montageflansch 2.21, der abnehmbar an dem festen Teil 2.22 der Ionisationselektrode 2.2 befestigt ist.

Die feuerfeste Umhüllung 2.24 tritt in die Kühlkammer 2.25 aus oder wird mit der äu-ßeren Umgebung durch ein zentrales Kühlmedium gekühlt.

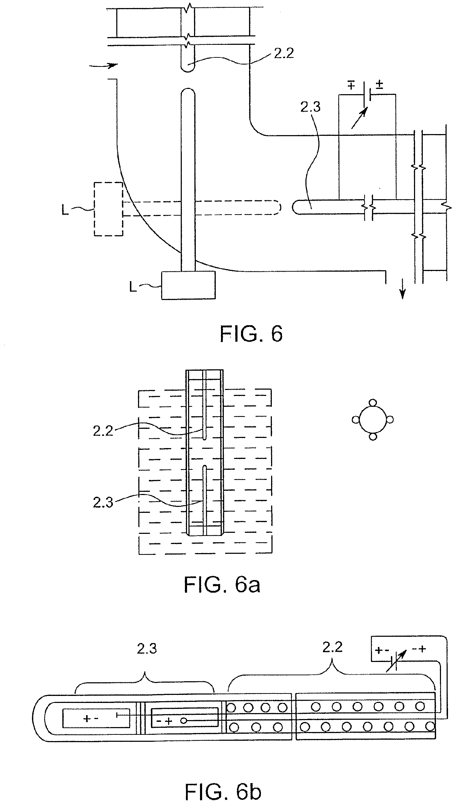

Fig. 6 zeigt eine weitere Ausführungsform einer supramolekularen Medienkonditionierungsvorrichtung, bei der die Polarisationskammer durch künstlich erzeugte Potentiale gebildet ist. Zwischen der Ionisationselektrode und der Polarisationselektrode wird in einem transparenten Rohr mit Wasserzugang bis zu den Elektroden eine andere Art von Energie auf das Medium übertragen, z. B. durch einen Laser L.

Fig. 6a zeigt schematisch eine weitere Vorrichtung mit einer supramolekularen Struktur für den Einsatz in offenen Wasserflächen und Stauseen.

Fig. 6b zeigt die kombinierte Lösung der lonisations- und Polarisationselektroden in einer einzigen Einheit mit intelligenter Steuerung der Polarisationspotentiale.

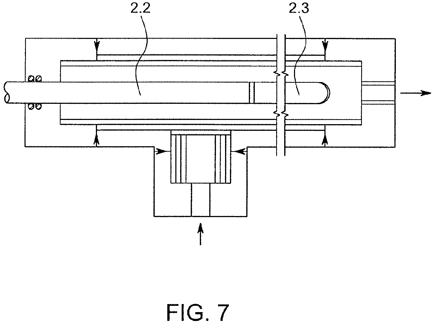

Fig. 7 zeigt eine Vorrichtung zur molekularen Behandlung von Brennstoffen mit einer kombinierten gemeinsamen Elektrode (Fig. 6b).

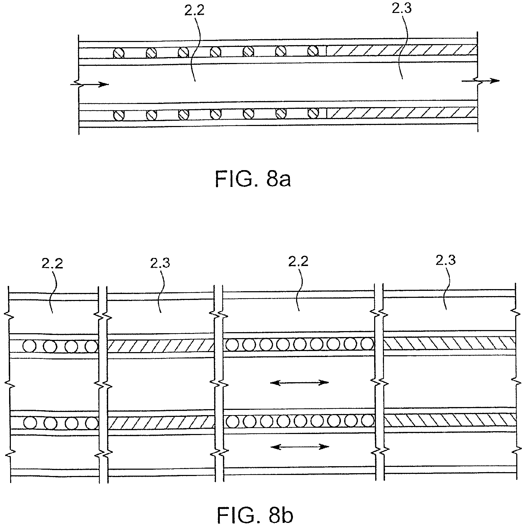

Fig. 8 zeigt eine kombinierte gemeinsame Elektrode mit einem Strom von flüssigem und/oder gasförmigem Medium in der Achse der Elektrode.

Fig. 8b zeigt eine gemeinsame kombinierte Elektrode mit wiederholter Ionisierung und Polarisierung für mehr als ein Medium, möglicherweise für Flüssigkeiten und Gase mit möglicherweise unterschiedlichem Medienfluss.

Das Verfahren kann bei der Herstellung von Metallgussteilen in der Phase verwendet werden, in der sich das Metall in einem flüssig-plastischen Zustand befindet. Ferner bei der Herstellung von Kunststoffprodukten bei der Vorbehandlung von Kunststoff in einem plastischen Zustand. Bei der Herstellung von Schichten (Zink, Silber usw.) auf einem Grundmaterial, entweder in einer Vakuumkammer oder in einer kontinuierlichen Linie. Durch die erfindungsgemäße Vorrichtung und das erfindungsgemäße Verfahren ist es auch möglich, die Veränderung Strukturen der Medien erreichen. Zum Schutz der Umwelt, z.B. im Gartenbau vor Frost, kann durch Versprühen von aufbereitetem Medium (Wasser) mit unterschiedlicher Temperatur Biomaterial, wie Reben, Bäume, besprüht werde. Die Technologie und die Ausrüstung können eingesetzt werden, um chemische Reaktionen mit anderen gelösten Stoffen zu beschleunigen und deren Qualität zu verbessern, z. B. bei der Herstellung von Reinigungsmitteln.

Das Verfahren und die Vorrichtung eignen sich auch zur Behandlung von flüssigen und gasförmigen Medien, die bei der Verbrennung von Brennstoffen, insbesondere des Rauchgases als Ausgangsprodukt der Oxidation, entstehen.

Eine weitere Anwendung besteht darin, die Medien in mindestens zwei aufeinanderfolgenden Zuständen zu behandeln, vorzugsweise zunächst im flüssigen Zustand und anschließend im gasförmigen Zustand, und zwar vor oder nach der natürlichen und/oder künstlichen Temperaturänderung.

| Messung des Temperaturanstiegs in einer industriellen Waschmaschine "PRIMUS von CHRISTEYNS" | | | | |
|---|---|---|---|---|
| Messung von unbehandeltem Wasser | | Messung des behandelten Wassers durch TREASURE | | |
| Zeit min. | Temperatur | Zeit min. | Temperatur | Effektivität |
| 7.33 | 19 | 5.53 | 19 | 32.50% |
| 7.6 | 19.5 | 5.83 | 19.5 | 30.30% |
| 8.03 | 20 | 6.2 | 20 | 29.50% |
| 8.36 | 20.5 | 6.6 | 20.5 | 26.60% |
| 8.76 | 21 | 6.9 | 21 | 27.00% |

| | **pH-Wert** | **Härte** | **CHSK** | **Ca²⁺** | **NO3** | **Mg²⁺** | **Cu** | **Als** | **Fe** | **Mn** |
|---|---|---|---|---|---|---|---|---|---|---|
| | | **Gewässer** | | | | | | | | |
| | | mmol/l | mg/l | mg/l | mg/l | mg/l | mg/l | mg/l | mg/l | mg/ l |
| **Probe Nr.1** | 6.9 | 3.24 | 8.2 | 36.07 | 6.3 | 39.5 | 0.204 | 1.0962 | 0.03 45 | 0.0 062 |
| **Probe Nr.2** | 7.31 | 2.8 | 0.44 | 102.2 0 | 4.20 | 79.6 1 | 0.023 6 | 0.8011 | 0.02 76 | 0 |
| | | | | | | | | | | |
| **Muster Nr. 3** | 7.8 | 4.2 | 9.00 | 50.1 | 4.44 | 14.5 8 | 0.026 7 | 1.0734 | 0.07 7 | 0.0 106 |
| **Muster Nr.4** | 7.4 | 2.5 | 0.48 | 116.23 | 2.4 | 26.74 | 0.0077 | 0.5088 | 0.048 8 | 0 |

| | | | | | | | | | | |
|---|---|---|---|---|---|---|---|---|---|---|
| Probe 1 ist das ursprüngliche unbehandelte Trinkwasser Probe Nr. 2 ist von TREASURE aufbereitetes Trinkwasser aus Probe Nr. 1. Probe 3 ist das ursprüngliche unbehandelte Trinkwasser Probe Nr. 4 ist das von der TREASURE aufbereitete Trinkwasser aus Probe Nr. 3. | | | | | | | | | | |

Die Erfindung betriff ein Verfahren zur physikalischen Behandlung von Flüssigkeiten und Gasen sowie Vorrichtung zur Durchführung des Verfahrens. Dabei wird das flüssige und/oder gasförmige Medium in einem Rohrleitungssystem mit geschlossenem Kreislauf mindestens einmal mit einer Frequenz von 120 MHz bis 1400 MHz beaufschlagt. Das Medium wird danach ionisiert und /oder polarisiert durch Photonen, vorzugsweise mittels eines Lasers. Die Polarisierung kann z.B. durch eine Gleichspannungsquelle erfolgen.

Die Polarisationsenergie kann dem Medium direkt und/oder indirekt (vorwiegend) über einen Isolator, vorzugsweise z.B. Glas und Silikate, hinzugefügt werden.

Der im Dampfkessel (1) erzeugte Dampf wird erfindungsgemäß in der Vorrichtung (9.3) behandelt und gelangt anschließend in die Turbine (2), an die der Generator (3) oder dessen technisches Äquivalent angeschlossen ist. Nach Entspannung des Dampfes wird dieser abgekühlt und gelangt in den Kondensator (4). Dort wird der Dampf in ein flüssiges Kondensat mit verändertem Zustand umgewandelt und durch die Pumpe (5) in den Speisetank (6.0) mit dem Entlüfter (6.1) gepumpt.

Vergleich der Kühlung mit Leitungswasser und mit dem TREASURE-Gerät modifiziertem supramolekularem, strukturell modifiziertem Wasser.

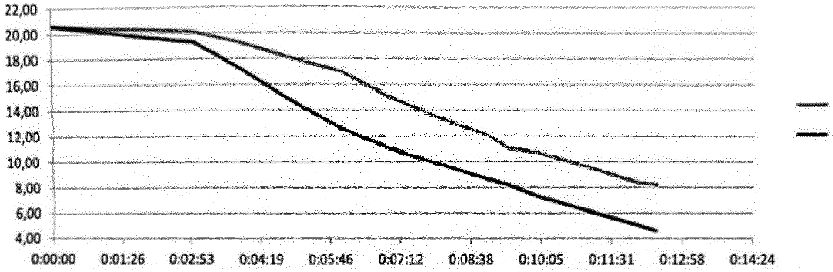

### SCHATTENBLICK

**WASSERVERSORGUNG** - normales Leitungswasser
**TREASURE** - modifiziertes Wasser mit supramolekularer Struktur

**Messung:**

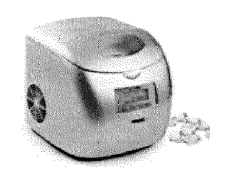

Messung wurde mit einem herkömmlichen Kühlgeräten (PRINCESS) durchgeführt: Typ: **Eiswürfelbereiter** geeichtes Digitalthermometer **Greisinger elektronic -GTH 1170** und Fühler **GOF 500**

### Bewertung:

Wie aus den beigefügten Tabellen und dem Diagramm hervorgeht, wurde durch kontinuierliche Abkühlungsmessungen der beiden oben genannten Wasserproben bestätigt, dass das modifizierte Wasser mit supramolekularer Struktur, das mit dem TREASURE-Gerät behandelt wurde, schneller Energie kumuliert/abgibt.

Das modifizierte Wasser wurde innerhalb von 3 Minuten auf eine Temperatur von 8,2°C abgekühlt. Anstelle von Standardwasser.

In der Praxis bedeutet dies eine Zeit-, Energie- und Kostenersparnis von etwa 24 %. Nach 12 Minuten Abkühlung war das modifizierte Wasser 3,3 °C kälter als das Standardwasser, was einem Unterschied von etwa 39 % entspricht.

Wir haben das TREASURE-Gerät in Kombination mit einem Laser und Gleichstrom für die Behandlung von Trink- und Brauchwasser eingesetzt. Das TREASURE-Gerät hatte eine Gesamtleistungsaufnahme von 1,4 Watt in Kombination mit einem 5-MW-Laser und einem 0,5-Watt-Gleichstrom. Ein 300-MHz-Sinuswellengenerator in Kombination mit einem Laser und Gleichstrom mit einem Gesamtverbrauch von 1,91 Watt behandelte das Trink- und Brauchwasser, wie in den beigefügten Tabellen gemessen und aufgezeichnet.

Neue wesentliche Merkmale der Behandlung von Flüssigkeiten mit einer Veränderung ihrer Eigenschaften sind insbesondere die Einwirkung von Photonen durch verschiedene Arten von Lasern oder Gleichstrom und/oder Wechselstrom mit einer sinusförmigen Wellenform ohne Phasenverschiebung in der AZ-Kammer mit Potentialen, die von Mineralien, vorzugsweisen Oxiden, Hydroxiden, Silikaten und Meteoriten gebildet werden.

## Patentansprüche

1. Verfahren zur physikalischen Behandlung von Flüssigkeiten, Gasen und Feststoffen bei einer Frequenz von 120 MHz bis 1450 MHz, **dadurch gekennzeichnet, dass** die Beaufschlagung des Mediums in verschiedenen Aggregatzuständen erfolgt und dass gasförmige Medien vor der Oxidation und/oder direkt während der Oxidation und/oder die Verbrennungsabgase des Brennstoffs beaufschlagt werden.

2. Verfahren nach Anspruch 1, **dadurch gekennzeichnet, dass** die Beaufschlagung der Medien anschließend mit Photonen, vorzugsweise durch einen Laser, und/oder durch natürliche Stoffe, wie Mineralien, künstlich, z.B. elektrisch, erfolgt.

3. Verfahren nach Anspruch 1 oder 2, **dadurch gekennzeichnet, dass** mit dem behandelnden Medium, insbesondere Wasser, biologische Material beaufschlagt wird.

4. Vorrichtung zur physikalischen Behandlung von Medien mit einem durchgehenden Körper, in dem eine Ionisationselektrode (2. 2) und eine Polarisationselektrode (2. 3) wasserdicht positioniert sind, nach einem der Ansprüche 1 bis 3, **dadurch gekennzeichnet, dass** der Ionisationselektrode eine transparente Silikatkammer AZ mit einer Mündung nachgeschlaltet ist, in der eine Photonenquelle - Laser (L) und/oder eine elektrische Quelle mit natürlichen Mineralien usw. - angeornet sind.

5. Vorrichtung nach einem der Ansprüche 1 bis 4, **gekennzeichnet durch** einen Kraftwerksblock mit folgenden Knotenpunkten: Kessel (1), Vergaser (6), Turbine (2) und Kondensationsbehälter (4), die durch ein Rohrleitungssystem miteinander verbunden sind, und dass an ihrem Einlaß und/oder Auslaß Einrichtungen zur Behandlung von Medien angeordnet sind.
